# EUROPÄISCHE PATENTSCHRIFT

(11) **EP 2 491 292 B1**
(45) Veröffentlichungstag und Bekanntmachung des Hinweises auf die Patenterteilung: **23.08.2017**
(21) Anmeldenummer: 10771421.4
(22) Anmeldetag: 20.10.2010
(51) Int. Cl.: F16L 59/065, F16L 59/14

(54) **DOPPELROHRSYSTEM**
DOUBLE TUBE SYSTEM
SYSTÈME À DOUBLE TUBE

(30) Priorität: 20.10.2009 DE 102009050072
(43) Veröffentlichungstag der Anmeldung: 29.08.2012
(73) Patentinhaber: FW-Fernwärme-Technik GmbH, 29227 Celle (DE)
(72) Erfinder: HARDERS, Volkwart, 30938 Burgwedel OT Engensen-Lahberg (DE); GRUBE, Lutz, 30519 Hannover (DE); FRÖHLICH, David, 31319 Sehnde (DE)
(74) Vertreter: Einsel, Martin
(86) Internationale Anmeldenummer: PCT/EP2010/065793
(87) Internationale Veröffentlichungsnummer: WO 2011/048143

(56) Entgegenhaltungen:
- AT-B- 318 331
- DE-U1-202007 006 746
- US-A- 4 130 301
- US-A- 5 996 643
- US-A1- 2002 089 177
- US-B2- 7 494 155

## Beschreibung

Die Erfindung betrifft ein Doppelrohrsystem mit einem ein Wärmemedium führenden Innenrohr, mit einer das Innenrohr koaxial zu dessen Achse umgebenden Isolierschicht, mit einem die Isolierschicht koaxial zur Achse umgebenden Rohrelement und mit einem das Rohrelement koaxial zur Achse umgebenden Mantelrohr, wobei das koaxial zwischen der Isolierschicht und dem Mantelrohr angeordnete Rohrelement ein Zwischenrohr ist, wobei zwischen dem Innenrohr und dem Zwischenrohr ein erster Ringraum gebildet wird, in dem sich die Isolierschicht befindet, wobei zwischen dem Zwischenrohr und dem Mantelrohr ein zweiter Ringraum angeordnet ist, wobei der erste Ringraum gegenüber dem zweiten Ringraum durch das Zwischenrohr dicht abgeschlossen ist, wobei Abstützelemente vorgesehen sind, die eine Bewegung des Innenrohrs relativ zum Mantelrohr erlauben, und wobei das Zwischenrohr und das Innenrohr in Abständen in Rohrlängsrichtung über Scheibenelemente miteinander verbunden sind. Doppelrohrsysteme sind beispielsweise aus der AT 318 331 B1, der DE 197 56 415 C1 und der DE 198 37 317 C1 bekannt. Sie werden unter anderem verwendet, um Fernwärme über eine längere Wegstrecke zu transportieren. Dabei werden in dem Doppelrohrsystem Fernwärmewasser oder Fernwärmedampf oder auch andere temperierte Wärmemedien transportiert.

Derartige Doppelrohrsysteme können für den oberirdischen, aber auch für den unterirdischen Transport genutzt werden. Die Fernwärme kann mittels Wasser oder Dampf transportiert werden, Doppelrohrsysteme werden aber auch für den Transport von Kondensat, Thermoöl oder Umwelt gefährdenden Medien genutzt. Überwiegend werden sie erdverlegt.

Die Wärmemedien oder andere Güter werden in einem Innenrohr geführt. Dieses Innenrohr wird gegenüber der Umgebung in geeigneter Form abgeschirmt. Die Temperaturen im Innenrohr des Doppelrohrsystems können je nach den zu transportierenden kalten oder heißen Medien im Temperaturbereich zwischen -200 °C und 400 °C liegen, teilweise sind auch noch höhere Temperaturen zu berücksichtigen. Diese Temperaturen der Medien im Innenrohr benötigen einen Temperaturschutz. Es muss selbstverständlich vermieden werden, dass über Wärmeleitung die in dem Wärmemedium enthaltene Wärmeenergie an die Umgebung abgegeben wird, statt wie beabsichtigt mittels des Wärmemediums durch die Rohrleitung transportiert zu werden.

Zu diesem Zweck wird um das meist aus Stahl bestehende Innenrohr herum eine koaxiale, im Querschnitt gesehen also ringförmige Isolierschicht vorgesehen. Diese Isolierschicht besteht aus einem Dämmstoff, der insbesondere eine sehr geringe Wärmeleitfähigkeit besitzt. Um diesen Dämmstoff herum kann zur Verbesserung der Isolierung wie in der DE 75 34 809 U1 vorgeschlagen, auch noch eine Aluminiumfolie gewickelt werden, die zu Evakuierungszwecken perforiert sein sollte.

Außen um die Isolierschicht herum befindet sich dann noch ein Mantelrohr. Der Raum zwischen dem Innenrohr und dem Mantelrohr mit der Isolierschicht wird darüber hinaus unter Unterdruck gesetzt, um die Wärmeleitung noch weiter herabzusetzen.

Sowohl das Innenrohr als auch das Mantelrohr besitzen einen kreisförmigen Querschnitt. Soweit sie geradlinig verlaufen, ist dieser Querschnitt meist auch gleich bleibend, die Rohre sind mithin also zylindrisch. Krümmungen sind möglich, um die Richtung der Rohrleitung zu ändern oder auch die Höhenlage, in der ein Doppelrohrsystem verlegt wird. Auch Abzweigungen sind denkbar und werden entsprechend ausgestattet.

In der DE 73 14 045 U1 wird ein Fernleitungsrohr mit Mantelrohr und mehreren parallel zueinander darin verlaufenden Leitungsrohren vorgeschlagen, die gegenüber dem Mantelrohr durch kurze Rohrelemente mit Abstandshaltern abgestützt werden.

In der DE 80 20 897 U1 wird eine Rohrleitung mit innerem Rohr und äußerem Rohr beschrieben, zwischen denen koaxial ein Rohrstutzen angeordnet und über

Zwischenstücke mit beiden Rohren verschweißt ist. Dadurch soll eine Art Zwischenfestpunkt mit Vakuumschott ausgebildet werden.

In der DE 10 2004 054 693 A1 wird eine Führungslagerkonstruktion eines Einzugrohres für Fernwärmeleitungen beschrieben. Dadurch kann nachträglich zur Sanierung einer Fernwärmeleitung ein Innenrohrelement kleineren Durchmessers eingeführt und abgedichtet werden.

Für den Transport kryogener Flüssigkeiten bei sehr tiefen Temperaturen, beispielsweise von Flüssigerdgas, wird in der US 7,494,155 B2 ein Rohrsystem aus drei koaxialen Rohren vorgeschlagen, bei dem im innersten Rohr die kryogene Flüssigkeit transportiert wird. Die drei koaxialen Rohrleitungen sind fest miteinander verbunden. Zwischen ihnen sind Isolierschichten angeordnet. Feste Verbindungselemente stützen kraftschlüssig die Rohre in voneinander getrennten Bereichen aneinander ab. Die Verbindungselemente zentrieren die Rohre. Die getrennten Bereiche werden gewählt, um eine Wärmeleitung vom innersten Rohr zum äußersten Rohr zu reduzieren. Das System ist starr. Durch die Verwendung von drei koaxialen Rohren sollen Kräfte besser verarbeitet werden, die auf die Rohrleitung aufgrund von Temperaturunterschieden zwischen dem geführten Medium und der Außenwelt auftreten und die sich vor allem in vertikal geführten und somit Höhenunterschiede überwindenden Abschnitten der gesamten Rohrleitung bemerkbar machen, auch Biegungen, oberirdisch geführte Rohrleitungsabschnitte oder solcher unter Wasser sollen dadurch mechanisch stabilisiert werden.

Bekannte Doppelrohrsysteme werden als Rohrleitungen wie erwähnt unter Umständen in der Erde verlegt, so dass von außen korrodierende Einflüsse an das Mantelrohr gelangen könnten. Das Mantelrohr kann daher außen auch noch mit einem Korrosionsschutz versehen werden, um ein Durchkorrodieren zu vermeiden.

Die Doppelrohrsysteme werden im Hinblick auf das verwendete Material auch als Stahlmantelrohrsysteme oder Stahlmantelrohrleitungssysteme bezeichnet. Generell sind diese Doppelrohrsysteme ideale Systeme für Rohrleitungen bei der Verlegung in horizontalen Bohrungen (sogenanntes hdd/horizontal directional drilling). Sie haben sich dort auch sehr bewährt.

Ein weiteres starres System mit drei konzentrischen Rohren ist aus der US-A 5,996,643 bekannt. Dort werden Rohre zur Verteilung von heißen Fluiden wie etwa Dampf oder Prozessgasen bei Temperaturen bis zu etwa 200°C, in Spitzen bis zu 230°C beschrieben. Zwischen einem mittleren Rohrelement und einem Mantelrohr ist das Anordnen von Abstandshaltern in Form von Rohrabschnitten vorgesehen, die aus dem gleichen oder einem ähnlichen Material wie das Mantelrohr bestehen und beispielsweise wellig ausgebildet sein können.

Wenn die Innenrohre und die Mantelrohre druckdicht miteinander verschweißt werden, können diese Doppelrohrsysteme auch für die Kreuzung von Flüssen, Kanälen, Seen oder überflutungsgefährdeten Bereichen eingesetzt werden.

Die erwähnte Isolierschicht für die Wärmeisolierung beziehungsweise Kälteisolierung ist insbesondere während der Verlegung des Doppelrohrsystems gefährdet, da gerade bei Baustellenverbindungen die Möglichkeit besteht, dass Wasser oder gegebenenfalls auch Schlamm eindringen kann. Auch im späteren Betriebszustand besteht die Gefahr, dass Leckagen an den Mantelrohren oder auch an den Innenrohren auftritt und auf diese Weise Feuchtigkeit in den Mantelrohrringraum gelangt, also in den Bereich zwischen dem Innenrohr und dem Mantelrohr, in dem sich die Isolierschicht befindet.

Ein Eintreten von Wasser oder Schlamm in diesen Ringraum zur Isolierschicht macht diese Isolierung unbrauchbar und führt zu kostspieligen und zeitraubenden Reparatur- und Austauschmaßnahmen.

Dabei ist zu berücksichtigen, dass die für die Isolierung und die Isolierschicht verwendeten Werkstoffe zwar ausgezeichnete Wärmeisolierungseigenschaften besitzen, jedoch nicht notwendig auch gegenüber mechanischen Belastungen oder gegenüber hinzutretendem Wasser oder Schlamm resistent sein müssen. Gerade im Hinblick auf die Eigenschaften, die den hohen Anforderungen bei der Wärmeisolierung genügen müssen, ist es vielmehr sogar so, dass hier eine gewisse Empfindlichkeit besteht.

Diesem Problem wird dadurch begegnet, dass beim Verlegen entsprechender Doppelrohrsysteme besondere Aufmerksamkeit darauf gerichtet wird, dass beim Verlegen der erwähnte Zutritt von Wasser oder Schlamm vermieden wird. Ferner wird für den Dauerbetrieb durch geeignete Auswahl des Materials und Sorgfalt auch darauf geachtet, dass eine möglichst hohe Festigkeit des Innenrohrs und des Mantelrohrs gegenüber Korrosion und Beschädigung besteht, um die Gefahr entsprechenden Durchtritts zu reduzieren.

Gerade der Umstand, dass derartige Doppelrohrsysteme insbesondere für Fernwärmeleitungen immer interessanter werden und auch ein Einsatz unter immer härteren und anspruchsvolleren Bedingungen gewünscht wird, führt zu zunehmend anspruchsvolleren Forderungen beim Verlegen derartiger Doppelrohrsysteme. So werden die Strecken für die zu verlegenden Leitungen länger und diese sollen auch größere Seen oder Wasserflächen unterqueren, was die Gefahr beim Verlegen für das Eintreten von Wasser erheblich erhöht.

Aufgabe der Erfindung wäre es daher, ein gattungsgemäßes Doppelrohrsystem vorzuschlagen, das für solche Anforderungen besser geeignet ist.

Diese Aufgabe wird bei einem gattungsgemäßen Doppelrohrsystem erfindungsgemäß dadurch gelöst, dass die Abstützelemente eine Bewegung des Innenrohrs relativ zum Mantelrohr längs der Achse erlauben, dass die Scheibenelemente Teilabschnitte des ersten Ringraums in dicht gegenüber dem zweiten Ringraum und dicht gegeneinander getrennte Abschnitte unterteilen, und dass zwischen den Abschnitten des ersten Ringraums in Rohrlängsrichtung Rohrverengungen des Zwischenrohres gebildet werden, und dass in den Rohrverengungen des Zwischenrohres der zweite Ringraum näher an das Innenrohr heranreicht und in den Bereichen der Rohrverengungen die Abstützelemente zum Abstützen des Mantelrohrs gegenüber dem Innenrohr außen auf dem Zwischenrohr angebracht sind, oder dass in den Rohrverengungen des Zwischenrohres der zweite Ringraum ganz an das Innenrohr heranreicht und in den Bereichen der Rohrverengungen die Abstützelemente zum Abstützen des Mantelrohrs gegenüber dem Innenrohr außen auf dem Innenrohr angebracht sind.

In dem ersten Ringraum zwischen dem Innenrohr und dem Zwischenrohr befindet sich dann die relativ empfindliche und meist aus einem relativ kostspieligen Material befindliche Isolierschicht. Das bedeutet, dass diese Isolierschicht nochmals separat eingebettet ist. Selbst Wasser oder Schlamm, welcher aufgrund einer Beschädigung des Mantelrohrs oder aufgrund von Korrosion durch das Mantelrohr eindringt, gelangt nicht bis zur Isolierschicht, sondern nur in den zweiten Ringraum zwischen dem Zwischenrohr und dem Mantelrohr.

Das Zwischenrohr selbst ist nicht der Umgebung ausgesetzt, sondern lediglich der Atmosphäre in dem zweiten Ringraum zwischen dem Mantelrohr und dem

Zwischenrohr. Eine Beschädigung dieses Zwischenrohrs ist damit nahezu ausgeschlossen, sodass die Isolierschicht zusätzlich geschützt ist.

Im Falle eines Eindringens von Wasser oder Schlamm etwa während des Verlegens des Doppelrohrsystems in den zweiten Ringraum oder auch nach einer Korrosion oder Beschädigung des Mantelrohrs kann ungünstigstenfalls in den zweiten Ringraum eindringen.

Damit ist die relativ kostspielige Isolierung im ersten Ringraum optimal geschützt, was keine der bekannten Konstruktionen ermöglicht. Auch bei Vorschlägen wie etwa aus der DE 80 20 897 U1 entsteht kein geschlossener Ringraum und bei einer Korrosion des Mantelrohres wird in derartigen herkömmlichen Doppelrohrsystemen die Isoliationsfähigkeit der Fernwärmeleitung praktisch sofort vernichtet.

Die erfindungsgemäße Konzeption dagegen ist ausgesprochen beschädigungstolerant und gibt darüber hinaus dem Betreiber der Fernwärmeleitung einen ganz erheblichen Zeitvorsprung, um einen etwa entstandenen Schaden zu entdecken, gleichwohl die Fernwärmeleitung risikolos und mit nach wie vor vorhandener guter Isolierung weiterzubetreiben und in dieser Zeit geeignete Maßnahmen zu treffen, um letztlich doch einen Ersatz oder eine Reparatur des beschädigten Rohres vorzunehmen.

Das Doppelrohrsystem mit einem Innenrohr und einem Mantelrohr kann durch die Erfindung auch noch einer weiteren Anforderung genügen. Aufgrund der hohen Temperaturunterschiede zwischen Innenrohr und Mantelrohr und aufgrund der Temperaturschwankungen der Medien im Innenrohr kann sich nämlich durch thermische Veränderungen die Längsausdehnung der beiden Rohre über die Zeit betrachtet unterschiedlich verhalten. Es wird nun dafür Sorge getragen, dass Verschiebungen des Innenrohrs innerhalb des Mantelrohrs in Längsrichtung im Rahmen der in Betracht kommenden Abmessungen stattfinden können. Aus diesem Grunde ist eine bewegliche Abstützung des Innenrohrs im Mantelrohr vorgesehen, was auch die Isolierschicht berücksichtigt.
Besonders bevorzugt ist es, wenn die eingesetzten Abstützelemente Rollen oder Kufen aufweisen, die auf der Innenwandung des Mantelrohres laufen.

Die Abstützelemente sind in diesem Falle außen auf dem Zwischenrohr fest montiert und besitzen Rollen oder Kufen, die sich nach außen erstrecken und dann auf der Innenwandung des Mantelrohres ablaufen. Sie zentrieren dadurch einerseits das Mantelrohr und sorgen andererseits für die Längsbewegung.
Alternativ ist eine Ausführungsform denkbar, bei der zwischen den Abschnitten des ersten Ringraums in Rohrlängsrichtung Rohrabschnitte gebildet werden, in denen der zweite Ringraum bis an das Innenrohr heranreicht und das Anordnen der Abstützelemente zum Abstützen des Mantelrohrs gegenüber dem Innenrohr ermöglicht.
In diesem Falle sind direkt auf der Außenwandung des Innenrohrs die Abstützelemente wie bei der vorher beschriebenen Ausführungsform befestigt. Die auch hier wiederum vorgesehenen Rollen oder Kufen oder möglicherweise anderen beweglichen Elemente laufen wiederum auf der Innenwandung des Mantelrohrs ab. Diese Ausführungsform ist konstruktiv einfacher und sorgt für eine direkte Zentrierung.

Die Beweglichkeit in Längsrichtung, die sich bei beiden alternativen Ausführungsformen ergibt, ist sehr erheblich und kann durch die unterschiedliche Wärmeausdehnung entstehende Längenunterschiede von beträchtlicher Dimension aufnehmen, anders als weitgehend starre und nur geringfügig biegbare Verbindungselemente, wie sie etwa aus der US 7,494,155 B2 bekannt sind.

Dadurch, dass diese Längsbewegung möglich wird, kann die Längenänderung aus Wärmedehnung oder Kältekontraktion innerhalb des Mantelrohres kompensiert werden. Gleichzeitig ist das Doppelrohrsystem an den Enden vakuum- bzw. druckdicht verschlossen. Richtungsänderungen sind so möglich, ohne den unter Unterdruck stehenden, quasi ein Vakuum um die Isolierschicht aufweisenden Ringraum zu unterbrechen.

Bei einer besonders bevorzugten Ausführungsform wird dabei auf ein werkseitig vorgefertigtes Rohrsystem über die Isolierschicht koaxial ein Zwischenrohr aus Edelstahl geschoben.

Dies hat sich als fertigungstechnisch besonders zweckmäßig erwiesen. Es wird also zunächst ein Innenrohr mit einer das Innenrohr umgebenden Isolierschicht gefertigt und darüber dann in einem zweiten Schritt ein Zwischenrohr aus insbesondere Edelstahl geschoben. An beiden Enden wird mittels eines Scheibenelements, beispielsweise einer Membranscheibe, dieses Zwischenrohr aus Edelstahl mit dem Innenrohr, also dem Medien führenden Rohr, verbunden.

Mit dieser Maßnahme wird der erste Ringraum zwischen dem Innenrohr und dem Zwischenrohr zusätzlich abgeschirmt. Das Zwischenrohr ist dann also nicht oder jedenfalls nicht zwingend über die gesamte Länge von Innenrohr und Mantelrohr zwischen diesen beiden koaxial angeordnet, sondern nur über bestimmte Streckenabschnitte. Am Ende dieser Streckenabschnitte wird senkrecht oder in einem schrägen Winkel das Zwischenrohr mit dem Innenrohr verbunden und grenzt so vollständig die Isolierschicht ab.

Auf diese Weise entstehen Rohre, die auch an ihren Enden keinen Zugang in den Bereich mit der Isolierschicht erlauben. Das bedeutet, dass beim Verlegevorgang Wasser oder Schlamm, der in das Ende des Rohres eindringt, auf keinen Fall mit der Isolierschicht in Berührung kommt. Diese ist also allseits von Stahl umgeben, nämlich auf der achsnahen Seite vom Innenrohr und auf der achsabgewandten Seite vom Zwischenrohr beziehungsweise von den Scheibenelementen oder Membranscheiben an ihren jeweiligen Enden.

Dies hat auch noch einen weiteren Vorteil. Sollte tatsächlich der Fall eintreten, dass vom Innenrohr aus eine Korrosion oder Beschädigung durch das dort geführte Medium auftritt, so gelangt dieses Medium aus dem Innenrohr durch die Wandung des Innenrohrs nur in einen Streckenabschnitt der im Übrigen allseits umgebenen Isolierschicht. Es kann also nicht etwa fortschreitend die Isolierschicht einer kompletten Rohrleitung vom dem Medium aus dem Innenrohr erreicht und möglicherweise zerstört werden, sondern nur ein einziger kurzer Streckenabschnitt. Die Scheibenelemente oder Membranen am Ende dieses Streckenabschnittes verhindern, dass das Medium weiter vordringt. Sollte ein Austritt durch eine Beschädigung des Innenrohrs in den Bereich zwischen zwei Streckenabschnitten gelangen, so kann dieses Medium wiederum nur in den Ringraum zwischen dem Zwischenrohr und dem Mantelrohr gelangen, nicht dagegen in die abgeschlossenen Streckenabschnitte mit den Isolierschichten. Eine weitere bevorzugte Ausführungsform besteht darin, dass das Zwischenrohr einen oder mehrere Kompensatoren aufweist, die einen Ausgleich einer temperaturbedingten Längenänderung des Zwischenrohres ermöglichen.

Durch eine solche Konzeption kann berücksichtigt werden, dass temperaturbedingt das Innenrohr und das Zwischenrohr sich in unterschiedlichem Maße in ihrer Länge verändern. Wenn ein Abschnitt des Zwischenrohrs insbesondere benachbart zu einem Ende eines Zwischenrohrabschnittes im Bereich eines Scheibenelementes vorgesehen wird, welches als Kompensator in der Form eines Wellrohres ausgebildet ist, so kann auf diese Weise eine Längenänderung des Zwischenrohres über seine gesamte Länge problemlos in diesem Wellrohrabschnitt aufgefangen und ausgeglichen werden. Durch geeignete Wahl der Länge und der Bildung des wellenförmigen Abschnittes können sowohl positive wie auch negative relative Längenänderungen des Zwischenrohres im Verhältnis zum Innenrohr ausgeglichen werden.

Alternativ zu einer solchen Konzeption kann auch eine andere Ausführungsform gewählt werden, in der die Membranscheibe so ausgelegt wird, dass sie den Vorgang des Ausdehnens oder des Zusammenziehens einer etwa 6 bis 8 m langen Strecke des Innenrohrs aufnehmen kann.

Dieser Effekt kann durch eine geeignete Wahl eines Winkels oder eine entsprechende leichte Beweglichkeit der Membranscheibe erzielt werden.

Dabei könnten die Membranscheiben beispielsweise die Form einer Kompensatorwelle besitzen.

Dies bedeutet, dass die Membranen rotationssymmetrisch um die Achse des Doppelrohrsystems angeordnet sind und im Längsschnitt längs der Achse des Doppelrohrsystems eine Form etwa eines S einnehmen, wobei die beiden Bogen des S über eine relativ lange gerade Linie verbunden sind.

Mit einer derartigen Form wird es durch die Biegungen des S der Kompensatorwelle besonders gut möglich, Längenänderungen des Innenrohrs zum Zwischenrohr aufgrund von Temperaturschwankungen auszugleichen.

Dabei werden bevorzugt Baueinheiten des Doppelrohrsystems eingesetzt, die eine Länge von 12 bis 16 m besitzen. Eine Baueinheit weist dann zwei derartige Isolierschutzstrecken auf. Um die Wärmedämmung zusätzlich zu verbessern, wird der Bereich zwischen dem Innenrohr und dem Zwischenrohr dauerhaft unter Unterdruck gesetzt. In diesem Bereich befindet sich mithin eine Isolierschicht, die nicht mit Luft oder einem anderen Medium in Verbindung steht, wodurch die Wärmeleitung weiter reduziert wird.

Die Isolierschicht ist somit besonders gut zwischen dem Innenrohr und dem Zwischenrohr geschützt. Sie kann den axialen Längenveränderungen des Innenrohrs folgen und auch einen Wärmeschutz beziehungsweise Kälteschutz in ausreichendem Maße sicher stellen. Sie stellt dies auch dann sicher, wenn der restliche Mantelrohrringraum außerhalb des Zwischenrohrs überflutet werden sollte.

In der Praxis kann man eine Vielzahl von derart isolierten Baueinheiten des Doppelrohrsystems auf der Baustelle vor Ort zusammenschweißen und auf diese Weise dort Längen von etwa 500 m des Doppelrohrsystems schaffen. Diese Längen von 500 m können dort druckgeprüft und auch vakuumgeprüft werden. Sie werden dann in Horizontalbohrungen oder auch durch Flüsse und Seen eingezogen.

Aufgrund der thermischen Beaufschlagung der Leitungen aus dem Doppelrohrsystem können auch Kompensatoren in Form von U-Bogen, L-Schenkeln, Z-Schenkeln, Axialkompensatoren und Gelenkkompensatoren eingesetzt werden.

Zweckmäßig werden die Leitungen dabei unter Betriebstemperaturen bis zu 180 °C thermisch vorgespannt. In diesem Zustand werden Druck- und Zugspannungen in den Innen- und Mantelrohren abgeleitet. Die entsprechende temperaturbedingte Längenänderung der Innenrohre wird über Vorspannfestpunkte durch das Mantelrohr aufgenommen und so ein geeigneter Mittelwert festgelegt.

Auf diese Weise ist es möglich, große Leitungsabschnitte auf dem "trockenen" vorzufertigen, also dort, wo eine gute Bearbeitung möglich ist. Diese Vorfertigung kann so stattfinden, dass der Mantelrohrringraum vollständig trocken bleibt, da er hier auch noch nicht unter besonderen Beanspruchungen leidet. Über Vorspann-/Endfestpunkte der erwähnten, beispielsweise 500 m langen Leitungsabschnitte des Doppelrohrsystems werden die Mantelrohrringräume außerhalb des Zwischenrohrs gasdicht und wasserdicht verschlossen. Über kurze Leitungsabschnitte, die beispielsweise 400 mm lang sind und mit einer in der Mitte liegenden Innenrohr-Verbindungsnaht und einem voll isolierten Mantelrohrinnenraum versehen werden, werden die Leitungslängen verbunden.

Das thermische Vorspannen der Leitungen des Doppelrohrsystems, die ein Wärmemedium (oder Kältemedium) führen, wird zweckmäßig durchgeführt, wenn der Leitungsabschnitt fix und fertig verlegt, verschweißt und geprüft ist, also nach dem Einziehen der Leitungsabschnitte in etwa den Horizontalbohrungen. An einer Stelle am Leitungsende wird das Mantelrohr für eine Rundschweißnaht vorbereitet, aber noch nicht verbunden. Die errechnete Vorspanntemperatur ergibt die Halbschalenlänge. Nach dem Vorspannen werden die Halbschalen in das Mantelrohr eingesetzt und verschweißt.

Da die Endfestpunkte beziehungsweise Vorspannfestpunkte die Temperatur des Innenrohres direkt nach Außen leiten können, ist es in einer Ausführungsform bevorzugt, auf einer Länge von ca. 2 m diese Bereiche durch ein übergeschobenes größeres zweites Mantelrohr zu verschließen und nach zu isolieren.

Erste Hochrechnungen zeigen, dass mit dem Bau von Rohrleitungen aus den erfindungsgemäßen Doppelrohrsystemen eine Lebensdauer von 50 Jahren und mehr erreicht werden kann, und zwar auch unter erheblichen Umweltbeanspruchungen, also bei Führung von Medien im Innenrohr mit sehr hohen Temperaturen oder auch stark veränderlichen Temperaturen und bei langen Wegstrecken, die etwa unter einem See oder auch unter einer Meeresbucht mit Salzwasser hindurchgeführt werden sollen.

Bei bevorzugten Ausführungsformen ist darüber hinaus vorgesehen, am Leitungsende über Vakuumstutzen die Ringräume zwischen dem Zwischenrohr und dem Mantelrohr automatisch und regelmäßig auf Dichtigkeit zu überwachen. Dies ist insbesondere bei relativ kurzen Leitungsstrecken von weniger als 500 m sehr gut einrichtbar.

Aber auch im Fall langer, beispielsweise See verlegter Leitungen mit den erfindungsgemäßen Doppelrohrsystemen, die aus mehreren derartigen 500 m langen Abschnitten bestehen, ist eine Kontrolle der Mantelrohrringräume möglich. Bei diesen Ausführungsformen werden am äußeren Mantelrohrumfang Leitungen angebracht, beispielsweise sogenannte Dreiviertelzoll-Leitungen. Mit diesen wird ein Stickstoffpolster im Mantelrohrringraum aufrecht erhalten. Dieses Stickstoffpolster hat dann bevorzugt einen leichten Überdruck von beispielsweise 1500 hPa (1,5 Bar). Dieser Überdruck verhindert dann, dass selbst bei Auftreten einer Leckage Umgebungswasser in das Mantelrohr eintritt.

Dieser Überdruck kommt andererseits nicht mit der empfindlichen Isolierschicht in Berührung, da er von dieser noch durch das Zwischenrohr getrennt ist. Das bedeutet, dass die Isolierschicht einerseits gegenüber dem Überdruck geschützt ist, und andererseits aufgrund des im Ringraum der Isolierschicht herrschenden Unterdrucks der niedrige Wärmeleitungskoeffizient unverändert genutzt werden kann.

In einer Ausführungsform ist vorgesehen, für jeden Abschnitt von 500 m Länge eine separate Stickstoffzuleitung vorzusehen. Dann können die Einzellängen auch individuell überwacht werden.

Auf diese Weise können zumindest im Bereich von 500 m langen Abschnitten etwa undicht gewordene Leitungsabschnitte grob lokalisiert werden. Dies kann durch Druckverluste des zugeführten Stickstoffpolsters leicht festgestellt werden. Mit einem Stickstoffdruck von 1500 hPa oder 1,5 Bar lässt sich darüber hinaus leicht verhindern, dass überhaupt Wasser in den Mantelrohrringraum eindringt, sofern das Rohr nicht tiefer als 15 m unterhalb einer Wasserfläche liegt. Auch eine tiefere Verlegung ist natürlich bei dieser Ausführungsform möglich, wenn ein höherer Stickstoffdruck als 1500 hPA oder 1,5 Bar verwendet wird.

Bei einer Verlegung der Rohre, die nicht unter Wasser stattfindet, kann auch eine Ausführungsform gewählt werden, bei der ein Unterdruck im zweiten Ringraum vorgesehen wird. Durch diesen Unterdruck kann die Isolierung gegenüber Wärmeleitung vom Innenrohr 10 auf das Mantelrohr 30 noch weiter reduziert werden.

Eine weitere bevorzugte Ausführungsform ist für den Tieftemperatureinsatz vorgesehen, bei denen die Temperatur des im Innenrohr strömenden Mediums unter -50 °C sinkt. Hierzu wird eine Ausführungsform eingesetzt, die sich dadurch auszeichnet, dass der erste Ringraum und/oder der zweite Ringgraum mit einem Isolierwerkstoff gefüllt sind, und dass in dem Isolierwerkstoff Konvektionsbremsen vorgesehen sind, insbesondere koaxial angeordnete Glasgewebelagen.

Hier wird bevorzugt eine offenzellige Wärmedämmung in dem Ringraum zwischen dem Innenrohr und dem Zwischenrohr vorgesehen. Diese offenzellige Wärmedämmung wird mit einer oder mehreren Lagen Konvektionsbremsen versehen. Diese Konvektionsbremse weist eine relativ dünne Lage Glasgewebeband oder dergleichen auf und verhindert so die Bildung eines gemeinsamen Konvektionsraums von Wärmedämmung und Ringspalt.

Mit Hilfe der Konvektionsbremse ist es möglich, Dämmstoffe mit relativ geringem Strömungswiderstand einzusetzen, ohne dass es wie sonst möglich auf der 6 Uhr Position am Mantelrohr zu lokalen Tieftemperaturen kommt.

Die erfindungsgemäßen Doppelrohrsysteme können nicht nur für laufende Meter Rohrleitung vorgesehen werden, sondern auch erforderliche Formstücke können entsprechend ausgebildet werden. Dies geht beispielsweise für Bögen, Festpunkte, T-Abzweigungen, Mauerdurchführungen, druckdichte Endverschlüsse, Lager, Kompensationselemente und dergleichen.

Im Folgenden werden anhand der Zeichnung drei Ausführungsbeispiele der Erfindung näher dargestellt. Es zeigen:
- **Figur 1**: einen Längsschnitt durch eine Ausführungsform eines erfindungsgemäßen Doppelrohrsystems;
- **Figur 2**: einen Längsschnitt durch ein Detail einer leicht modifizierten Ausführungsform eines erfindungsgemäßen Doppelrohrsystems;
- **Figur 3**: einen Längsschnitt durch eine dritte Ausführungsform eines erfindungsgemäßen Doppelrohrsystems;
- **Figur 4**: einen Längsschnitt in anderer Form der Ausführungsform aus Figur 3; und
- **Figur 5**: einen Längsschnitt in einer eher maßstabsgerechten Darstellung der Ausführungsform aus den Figuren 3 und 4.

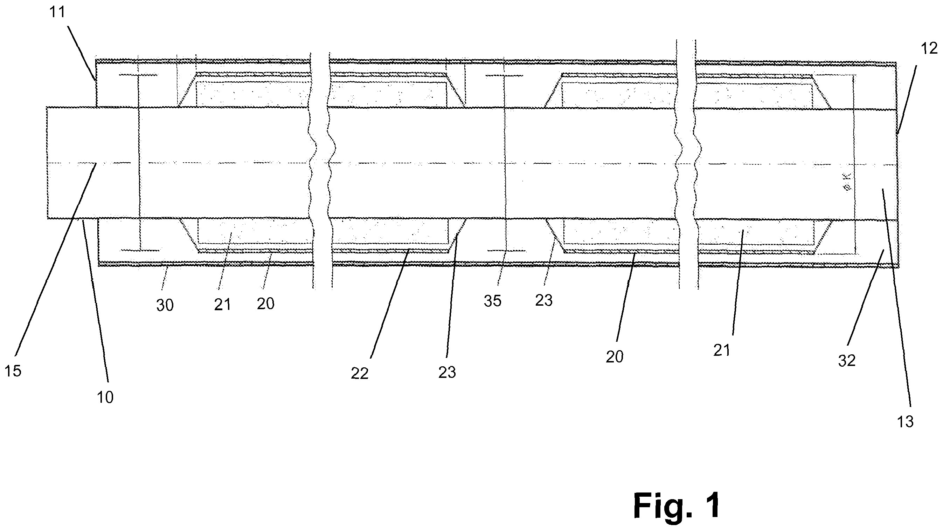

Ein Doppelrohrsystem dient zum Aufbau einer Rohrleitung, mit der ein flüssiges Medium transportiert werden soll. In der Figur 1 sieht man, dass ein Innenrohr 10 vorgesehen ist, welches einen kreisförmigen Querschnitt besitzt und an zwei Enden 11 und 12 jeweils offen ist, damit das Medium 13 hindurchströmen kann.

Das Innenrohr 10 besitzt dabei eine Achse 15, um die es mit seinem kreisförmigen Querschnitt zylindrisch angeordnet ist.

Um das Innenrohr 10 und dessen Wandung herum befindet sich also außerhalb der Wandung eine Isolierschicht 21. Diese Isolierschicht 21 ist in der dargestellten Ausführungsform nicht durchgehend und kontinuierlich in Längsrichtung des Innenrohres 10 vorgesehen, sondern nur über bestimmte Streckenabschnitte. Diese Streckenabschnitte können beispielsweise etwa 8 m Länge betragen.

Die Isolierschicht 21 wird ihrerseits von einem Zwischenrohr 20 umgeben. Zwischen dem Zwischenrohr 20 und dem Innenrohr 10 bildet sich mithin ein Ringraum 22, der zumindest teilweise von der Isolierschicht 21 gefüllt ist. Das Zwischenrohr 20 kann auch als Kammerrohr bezeichnet werden.

Das Zwischenrohr 20 ist koaxial zur Achse 15 des Innenrohrs 10. Auch das Zwischenrohr 20 ist mithin zylindrisch ausgebildet. Es erstreckt sich wie auch die Isolierschicht 21 über einen bestimmten Streckenabschnitt, der geringfügig größer als der für die Isolierschicht 21 sein kann. Auch das Zwischenrohr 20 ist mithin nicht durchgehend über das Innenrohr 10 geführt.

Die Enden der Streckenabschnitte des Zwischenrohrs 20 werden über Scheibenelemente 23, hier Membranscheiben, mit dem Innenrohr 10 verbunden. Das bedeutet, dass der Ringraum 22 zwischen dem Innenrohr 10 und dem Zwischenrohr 20 allseits von abgedichteten Flächen umgeben ist, nämlich einerseits von der Außenseite des Innenrohrs 10, andererseits von der Innenseite des Zwischenrohrs 20 und schließlich von den beiden Scheibenelementen 23 beziehungsweise Membranscheiben an seinen beiden Enden in Längsrichtung.

Es bildet sich also eine Kammer in Form eines in Längsrichtung begrenzten Ringraums. Dies unterstreicht den oben schon erwähnten Begriff Kammerrohr für das Zwischenrohr 20.

Die Scheibenelemente 23 beziehungsweise Membranscheiben sind in dieser Ausführungsform nicht in einer Fläche senkrecht zur Achse 15 angeordnet, sondern in etwa kegelstumpfförmig in einem schrägen Winkel zu dieser, der in der dargestellten Ausführungsform in einer Größenordnung von etwa 45° liegt. Die Scheibenelemente 23 beziehungsweise Membranscheiben sind so ausgebildet, dass sie Längenänderungen des Innenrohrs 10 zum Zwischenrohr 20 aufgrund der wechselnden Temperaturunterschiede zwischen diesen beiden Rohren 10, 20 durch entsprechende Änderungen in ihrer Steigung aufnehmen können.

Das gesamte System aus Innenrohr 10 und Zwischenrohr 20 wird außen von einem Mantelrohr 30 umgeben. Das bedeutet, dass sich zwischen dem Zwischenrohr 20 und dem Mantelrohr 30 ein zweiter Ringraum 32 ausbildet. Auch das Mantelrohr 30 ist koaxial zur Achse 15 und besitzt einen kreisförmigen Querschnitt. Das Mantelrohr 30 ist wie das Innenrohr 10 durchgehend und besitzt einen konstanten Querschnitt in Längsrichtung der Achse 15.

Als Material für Innenrohr 10, Zwischenrohr 20 und Mantelrohr 30 kann jeweils Stahl, insbesondere Edelstahl, gewählt werden.

Das entstehende Doppelrohrsystem aus Innenrohr 10 und Mantelrohr 30 mit dazwischen angeordneter Isolierung 21 und Zwischenrohr 20 kann unter der Erdoberfläche oder auch auf dem Boden eines Sees oder einer Meeresbucht verlegt werden. Von außen durch das Mantelrohr 30 in den zweiten Ringraum 32 nach einer Beschädigung oder einer Korrosion eindringende Erde oder Wasser kann nicht bis zur Isolierschicht 21 vordringen, da diese durch die Zwischenschicht 20 abgeschirmt ist.

Wenn außerdem in dem zweiten Ringraum 32 ein Gas, beispielsweise Stickstoff, mit einem gegenüber der Umgebung leichten Überdruck vorgesehen ist, wird auch dadurch verhindert, dass Schlamm oder Wasser überhaupt durch das Mantelrohr 30 bis in den zweiten Ringraum 32 vordringen kann. Gleichwohl kann dieses unter leichtem Überdruck stehende Gas nicht die Funktion der Isolierschicht 21 beeinträchtigen, die sich in dem ersten Ringraum 22 befindet, da auch dieses durch das Zwischenrohr 20 gemeinsam mit den Membranscheiben 23 verhindert wird.

Im ersten Ringraum 22 kann stattdessen ein Unterdruck angelegt werden, um die Wärmedämmung durch die Isolierschicht 21 weiter zu verbessern.

In den Bereichen zwischen den Streckenabschitten mit der Isolierschicht 21 und dem diese umgebenden Zwischenrohr 20 ist vorgesehen, Abstützelemente 35 anzuordnen. Diese Abstützelemente 35 bewirken eine insbesondere auch bewegliche Abstützung des Mantelrohrs 30 gegenüber dem Innenrohr 10. Diese Abstützelemente 35 können insbesondere zu dem Zweck beweglich vorgesehen werden, dass durch die veränderlichen Temperaturunterschiede zwischen dem Innenrohr 10 und dem Mantelrohr 30 auch eine Verschiebung parallel zur Achse 15 dieser beiden Rohre zueinander stattfinden kann.

Die Abstützelemente 35 haben also auch die Funktion eines Lagers. Sie sind in der Figur 1 nur schematisch angedeutet. Sie können Rollen oder Kufen besitzen, die auf der Innenwandung des Mantelrohrs 30 laufen. In diesem Falle sind die Abstützelemente 35 auf der Außenwandung des Innenrohrs 10 fest montiert oder aufgespannt. Neben Rollen oder Kufen sind auch andere, ähnlich wirkende Abstützelemente 35 denkbar.

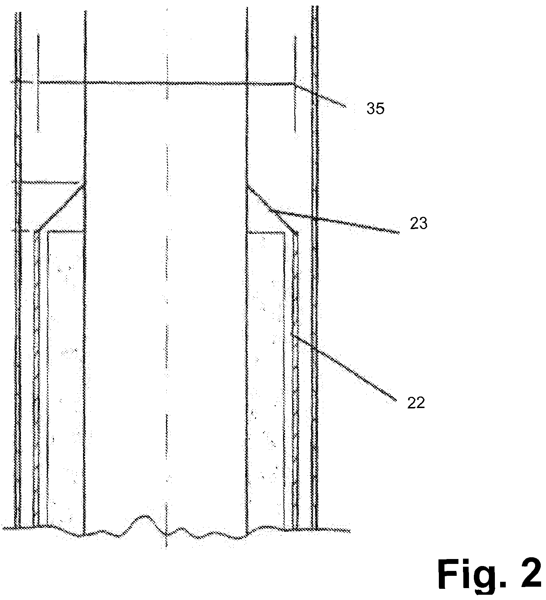

In der **Figur 2** sieht man leicht modifiziert den Aufbau der Membranscheiben 23 in einer etwas geänderten Ausführungsform. Auch hier ist die Darstellung als Längsschnitt längs der Achse 15 des Doppelrohrsystems aufgebaut. Man sieht, dass das rotationssymmetrisch zur Achse 10 aufgebaute Scheibenelement 23 beziehungsweise die Membranscheibe den Durchmesserübergang vom Innenrohr 10 zum Zwischenrohr 20 nachbildet und dabei zugleich den ersten Ringraum 22 innerhalb des Zwischenrohrs 20 vom zweiten Ringraum 32 außerhalb des Zwischenrohrs 20 trennt.

Dabei ist das Scheibenelement 23 beziehungsweise die Membranscheibe nach Art einer Kompensatorwelle aufgebaut. Das bedeutet, dass sie sowohl an das Innenrohr 10 als auch an das Zwischenrohr 20 mit einer leichten Krümmung anschließt und zwischen diesen beiden Krümmungen eine relativ lange gerade Linie liegt.

In räumlicher Betrachtung entsteht auf diese Weise eine Art zur Achse rotationssymmetrischer Kegel mit abgerundeten Anschlüssen an Innenrohr 10 und Zwischenrohr 20. Dadurch kann besonders gut aufgrund der Krümmungen eine Längenänderung des Innenrohrs 10 und des Zwischenrohrs 20 relativ zueinander aufgrund von Temperaturschwankungen ausgeglichen beziehungsweise kompensiert werden.

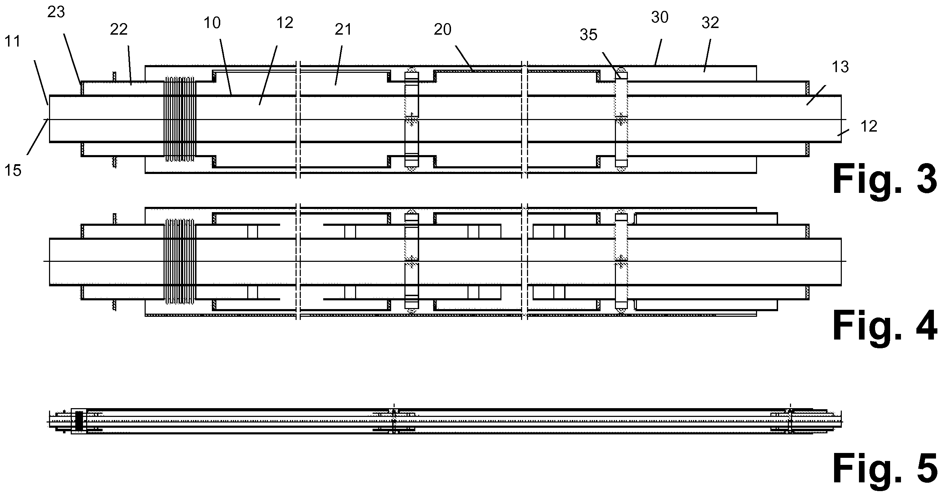

In der **Figur 3** sieht man eine dritte Ausführungsform der Erfindung. Diese gleicht den bereits beschriebenen Ausführungsformen aus den Figuren 1 und 2, arbeitet allerdings nicht mit Membranscheiben für die Scheibenelemente 23. Die Scheibenelemente 23 sind hier vertikale und nichtelastische Scheiben, die das Innenrohr 10 und das Zwischenrohr 20 fest miteinander verbinden.

Das Zwischenrohr 20 selbst ist allerdings in einem Teilabschnitt seiner Länge in der Nähe des Abschlusses durch das Scheibenelement 23 als Kompensator ausgebildet. Das bedeutet, dass insbesondere nach Art eines Wellrohrs ein Teilabschnitt des Zwischenrohrs mechanisch einfach eine Längenänderung vornehmen kann.

Auf diese Weise können Längenänderungen des Zwischenrohrs 20 relativ zum Innenrohr 10, die temperaturabhängig über die gesamte Länge eines Zwischenrohrs 20 entstehen und damit durchaus relevant sein können, innerhalb des Kompensators leicht ausgeglichen werden.

Wie man in der Figur 3 außerdem sieht, ist das Zwischenrohr 20 auch in einigen Abständen jeweils mit einer Verengung oder Einschnürung versehen. In diesen Bereichen ist jeweils ein Abstützelement 35 vorgesehen, welches außen auf diesem verengten Querschnitt des Zwischenrohres 20 aufgebracht ist und mit Rollen oder Kufen auf der Innenseite des Mantelrohrs 30 abläuft.

Auf diese Weise kann eine gemeinsame Bewegung von Innenrohr 10 und Zwischenrohr 20 samt der zwischen diesen beiden Rohren befindlichen Isolierschicht 21 im ersten Ringraum 22 relativ zu dem Mantelrohr 30 vorgesehen werden.

Es bewegt sich also das Mantelrohr 30 relativ zum Innenrohr 10, dieses aber gemeinsam mit dem Zwischenrohr 20. Der Ausgleich dieser Bewegung findet also nur innerhalb des zweiten Ringraumes 32 statt, der nicht mit wertvollem Isoliermaterial gefüllt ist.

In der **Figur 4** ist der Schnitt aus der Figur 3 durch die gleiche Ausführungsform nochmals etwas weiter geöffnet und die in der Figur 3 angedeutete Isolierschicht 21 weggelassen. Man sieht dadurch den Aufbau im Inneren des Zwischenrohrs 20 benachbart zu dessen Ende.

In der **Figur 5** ist ein Rohr in einer etwas praxisnäheren und tendenziell maßstabsgerechten Darstellung gezeigt, aus der man entnehmen kann, dass die Abstützelemente 35 und die Scheibenelemente 23 betrachtet über die Gesamtlänge einer Fernwärmeleitung in deutlich größeren Abständen auftreten, als dies die vergrößerte Darstellung aus den Figuren 1 bis 4 zunächst oberflächlich vermuten lässt.

### Bezugszeichenliste

- 10: Innenrohr
- 11: ein Ende des Innenrohrs
- 12: ein anderes Ende des Innenrohrs
- 13: Medium im Innenrohr 10
- 15: Achse des Innenrohrs 10

- 20: Zwischenrohr
- 21: Isolierschicht
- 22: erster Ringraum
- 23: Scheibenelemente, beziehungsweise Membranscheiben

- 30: Mantelrohr
- 32: zweiter Ringraum
- 35: Abstützelemente

## Patentansprüche

1. Doppelrohrsystem,
mit einem ein Wärmemedium führenden Innenrohr (10),
mit einer das Innenrohr (10) koaxial zu dessen Achse (15) umgebenden Isolierschicht (21),
mit einem die Isolierschicht (21) koaxial zur Achse (15) umgebenden Rohrelement und
mit einem das Rohrelement koaxial zur Achse (15) umgebenden Mantelrohr (30),
**wobei** das koaxial zwischen der Isolierschicht (21) und dem Mantelrohr (30) angeordnete Rohrelement ein Zwischenrohr (20) ist,
**wobei** zwischen dem Innenrohr (10) und dem Zwischenrohr (20) ein erster Ringraum (22) gebildet wird, in dem sich die Isolierschicht (21) befindet,
**wobei** zwischen dem Zwischenrohr (20) und dem Mantelrohr (30) ein zweiter Ringraum (32) angeordnet ist,
**wobei** der erste Ringraum (22) gegenüber dem zweiten Ringraum (32) durch das Zwischenrohr (20) dicht abgeschlossen ist, und
**wobei** Abstützelemente (35) vorgesehen sind, die eine Bewegung des Innenrohrs (10) relativ zum Mantelrohr (30) erlauben,
**wobei** das Zwischenrohr (20) und das Innenrohr (10) in Abständen in Rohrlängsrichtung über Scheibenelemente (23) miteinander verbunden sind, **dadurch gekennzeichnet, dass** die Abstützelemente (35) eine Bewegung des Innenrohrs (10) relativ zum Mantelrohr (30) längs der Achse (15) erlauben,
**dass** die Scheibenelemente (23) Teilabschnitte des ersten Ringraums (22) in dicht gegenüber dem zweiten Ringraum (32) und dicht gegeneinander getrennte Abschnitte unterteilen,
**dass** zwischen den Abschnitten des ersten Ringraums (22) in Rohrlängsrichtung Rohrverengungen des Zwischenrohres (20) gebildet werden, und
**dass** in den Rohrverengungen des Zwischenrohres (20) der zweite Ringraum (32) näher an das Innenrohr (10) heranreicht und in den Bereichen der Rohrverengungen die Abstützelemente (35) zum Abstützen des Mantelrohrs (30) gegenüber dem Innenrohr (10) außen auf dem Zwischenrohr (20) angebracht sind, oder **dass** in den Rohrverengungen des Zwischenrohres (20) der zweite Ringraum (32) ganz an das Innenrohr (10) heranreicht und in den Bereichen der Rohrverengungen die Abstützelemente (35) zum Abstützen des Mantelrohrs (30) gegenüber dem Innenrohr (10) außen auf dem Innenrohr (10) angebracht sind.

2. Doppelrohrsystem nach Anspruch 1,
**dadurch gekennzeichnet,**
**dass** der erste Ringraum (22) zwischen dem Innenrohr (10) und dem Zwischenrohr (20) mit der Isolierschicht (21) unter Unterdruck steht.

3. Doppelrohrsystem nach Anspruch 1 oder 2,
**dadurch gekennzeichnet,**
**dass** die Scheibenelemente (23) Membranscheiben sind, bevorzugt in der Form einer Kompensatorwelle.

4. Doppelrohrsystem nach einem der vorstehenden Ansprüche,
**dadurch gekennzeichnet,**
**dass** die Abstützelemente (35) Rollen oder Kufen aufweisen, die auf der Innenwandung des Mantelrohres (30) laufen.

5. Doppelrohrsystem nach einem der vorstehenden Ansprüche,
**dadurch gekennzeichnet,**
**dass** das Zwischenrohr (20) einen oder mehrere Kompensatoren aufweist, die einen Ausgleich einer temperaturbedingten Längenänderung des Zwischenrohres (20) ermöglichen.

6. Doppelrohrsystem nach einem der vorstehenden Ansprüche,
**dadurch gekennzeichnet,**
**dass** Elemente vorgesehen sind, die eine Bewegung des Zwischenrohrs (20) relativ zum Innenrohr (10) längs der Achse (15) erlauben.

7. Doppelrohrsystem nach einem der vorstehenden Ansprüche,
**dadurch gekennzeichnet,**
**dass** der zweite Ringraum (32) mit einem unter Überdruck stehenden Gas gefüllt ist.

8. Doppelrohrsystem nach Anspruch 7,
**dadurch gekennzeichnet,**
**dass** das Gas im zweiten Ringraum (32) zwischen dem Zwischenrohr (20) und dem Mantelrohr (30) Stickstoff ist, insbesondere Stickstoff unter einem Druck von mehr als 1200 hPa (1,2 Bar) und weniger als 2000 hPa (2,0 Bar), insbesondere 1500 hPa (1,5 Bar).

9. Doppelrohrsystem nach einem der vorstehenden Ansprüche,
**dadurch gekennzeichnet,**
**dass** außerhalb des Mantelrohres (30) zumindest über kurze Abschnitte in Rohrlängsrichtung ein koaxiales äußeres zweites Mantelrohr (30) vorgesehen ist.

10. Doppelrohrsystem nach einem der vorstehenden Ansprüche,
**dadurch gekennzeichnet,**
**dass** Drucksensoren in dem zweiten Ringraum (32) vorgesehen sind, welche den Druck des dort befindlichen Gases messen und Signale an eine entfernt angeordnete Anzeigeeinrichtung übermitteln.

11. Doppelrohrsystem nach einem der vorstehenden Ansprüche,
**dadurch gekennzeichnet,**
**dass** der erste Ringraum (22) und/oder der zweite Ringgraum (32) mit einem Isolierwerkstoff gefüllt sind, und
**dass** in dem Isolierwerkstoff Konvektionsbremsen vorgesehen sind, insbesondere koaxial angeordnete Glasgewebelagen.

## Claims

1. Double pipe system, comprising
an inner pipe conveying a heating medium (10),
an insulating layer (21) surrounding the inner pipe (10) coaxially relative to the axis (15) thereof,
a pipe element surrounding the insulating layer (21) coaxially relative to the axis (15) and
an encasing pipe (30) surrounding the pipe element coaxially relative to the axis (15),
wherein the pipe element arranged coaxially between the insulating layer (21) and the encasing pipe (30) is an intermediate pipe (20),
wherein a first annular space (22) in which the insulating layer (21) is located is formed between the inner pipe (10) and the intermediate pipe (20), wherein a second annular space (32) is arranged between the intermediate pipe (20) and the encasing pipe (30),
wherein the first final annular space (22) is sealed in relation to the second annular space (32) by the intermediate pipe (20), and
wherein there are provided supporting elements (35) which permit movement of the inner pipe (10) relative to the encasing pipe (30),
wherein the intermediate pipe (20) and the inner pipe (10) are connected to one another at intervals along the longitudinal direction of the pipe by means of disk elements (23),
**characterized**
**in that** the supporting elements (35) permit a movement of the inner pipe (10) relative to the encasing pipe (30) along the axis (15),
**in that** the disk elements (23) subdivide partial sections of the first annular space (22) into separate sections that are sealed with respect to the second annular space (32) and are sealed with respect to each other,
**in that** pipe-constrictions of the intermediate pipe (20) are formed between the sections of the first annular space (22) in the longitudinal direction of the pipe, and
**in that** the second annular space (32) extends closer to the inner pipe (10) in the pipe-constrictions of the intermediate pipe (20) and the supporting elements (35) are attached externally to the intermediate pipe (20) in the regions of the pipe-constrictions for the purposes of supporting the encasing pipe (30) with respect to the inner pipe (10), or
**in that** the second annular space (32) extends right up to the inner pipe (10) in the pipe-constrictions of the intermediate pipe (20) and the supporting elements (35) are attached externally to the inner pipe (10) in the regions of the pipe-constrictions for the purposes of supporting the encasing pipe (30) with respect to the inner pipe (10).

2. A double pipe system in accordance with Claim 1, **characterized in that** the first annular space (22) between the inner pipe (10) and the intermediate pipe (20) with the insulating layer (21) is at negative pressure.

3. A double pipe system in accordance with Claim 1 or 2, **characterized in that** the disk elements (23) are membrane disks, preferably in the form of a compensator undulation.

4. A double pipe system in accordance with any of the preceding Claims, **characterized**
**in that** the supporting elements (35) comprise rollers or runners which run on the inner wall of the encasing pipe (30).

5. A double pipe system in accordance with any of the preceding Claims, **characterized**
**in that** the intermediate pipe (20) comprises one or more compensators which enable compensation for a temperature-dependent alteration in the length of the intermediate pipe (20).

6. A double pipe system in accordance with any of the preceding Claims, **characterized**
**in that** there are provided elements which permit a movement of the intermediate pipe (20) relative to the inner pipe (10) along the axis (15).

7. A double pipe system in accordance with any of the preceding Claims, **characterized**
**in that** the second annular space (32) is filled with a gas which is at positive pressure.

8. A double pipe system in accordance with Claim 7, **characterized**
**in that** the gas in the second annular space (32) between the intermediate pipe (20) and the encasing pipe (30) is nitrogen, and in particular nitrogen under a pressure of more than 1200 hPa (1.2 bar) and less than 2000 hPa (2.0 bar), in particular 1500 hPa (1.5 bar).

9. A double pipe system in accordance with any of the preceding Claims, **characterized**
**in that** a second, coaxial, outer encasing pipe (30) is provided externally of the encasing pipe (30) at least over short sections in the longitudinal direction of the pipe.

10. A double pipe system in accordance with any of the preceding Claims, **characterized**
**in that** there are provided pressure sensors in the second annular space (32) which measure the pressure of the gas there and transmit signals to a distantly located indicator device.

11. A double pipe system in accordance with any of the preceding Claims, **characterized**
**in that** the first annular space (22) and/or the second annular space (32) are filled with an insulating material, and
**in that** convection brakes are provided in the insulating material, in particular coaxially arranged glass fabric layers.

## Revendications

1. Système à double tube,
avec un tube intérieur (10) conduisant un fluide thermique,
avec une couche isolante (21) entourant le tube intérieur (10) coaxialement à son axe (15),
avec un élément de tube entourant la couche isolante (21) coaxialement à l'axe (15) et
avec un tube enveloppe (30) entourant l'élément de tube coaxialement à l'axe (15),
dans lequel l'élément de tube agencé coaxialement entre la couche isolante (21) et le tube enveloppe (30) est un tube intermédiaire (20),
dans lequel un premier espace annulaire (22) est formé entre le tube intérieur (10) et le tube intermédiaire (20), dans lequel se trouve la couche isolante (21),
dans lequel un deuxième espace annulaire (32) est agencé entre le tube intermédiaire (20) et le tube enveloppe (30),
dans lequel le premier espace annulaire (22) est fermé de manière étanche par rapport au deuxième espace annulaire (32) par le tube intermédiaire (20), et
dans lequel des éléments d'appui (35) sont prévus, qui permettent un déplacement du tube intérieur (10) par rapport au tube enveloppe (30),
dans lequel le tube intermédiaire (20) et le tube intérieur (10) sont reliés l'un à l'autre à des distances dans la direction longitudinale du tube via des éléments formant disque (23),
**caractérisé en ce**
**que** les éléments d'appui (35) permettent un déplacement du tube intérieur (10) par rapport au tube enveloppe (30) le long de l'axe (15),
**que** les éléments formant disque (23) divisent des sections partielles du premier espace annulaire (22) en sections séparées de manière étanche l'une contre l'autre et de manière étanche par rapport au deuxième espace annulaire (32),
**que** des rétrécissements de tube du tube intermédiaire (20) sont formés entre les sections du premier espace annulaire (22) dans la direction longitudinale du tube, et
**que** dans les rétrécissements de tube du tube intermédiaire (20), le deuxième espace annulaire (32) est plus près du tube intérieur (10) et dans les zones des rétrécissements de tube, les éléments d'appui (35) sont montés à l'extérieur sur le tube intermédiaire (20) pour l'appui du tube enveloppe (30) par rapport au tube intérieur (10), ou
**que** dans les rétrécissements de tube du tube intermédiaire (20), le deuxième espace annulaire (32) est complètement au niveau du tube intérieur (10) et dans les zones des rétrécissements de tube, les éléments d'appui (35) sont montés à l'extérieur sur le tube intérieur (10) pour l'appui du tube enveloppe (30) par rapport au tube intérieur (10).

2. Système à double tube selon la revendication 1,
**caractérisé en ce**
**que** le premier espace annulaire (22) est en dépression entre le tube intérieur (10) et le tube intermédiaire (20) avec la couche isolante (21).

3. Système à double tube selon la revendication 1 ou 2
**caractérisé en ce**
**que** les éléments formant disque (23) sont des disques membrane, de préférence sous la forme d'un arbre de compensation.

4. Système à double tube selon l'une quelconque des revendications précédentes,
**caractérisé en ce**
**que** les éléments d'appui (35) présentent des rouleaux ou patins, qui courent sur la paroi intérieure du tube enveloppe (30).

5. Système à double tube selon l'une quelconque des revendications précédentes,
**caractérisé en ce**
**que** le tube intermédiaire (20) présente un ou plusieurs compensateurs, qui permettent une compensation d'un changement de longueur du tube intermédiaire (20) dû à la température.

6. Système à double tube selon l'une quelconque des revendications précédentes,
**caractérisé en ce**
**que** des éléments sont prévus, qui permettent un déplacement du tube intermédiaire (20) par rapport au tube intérieur (10) le long de l'axe (15).

7. Système à double tube selon l'une quelconque des revendications précédentes,
**caractérisé en ce**
**que** le deuxième espace annulaire (32) est rempli d'un gaz en surpression.

8. Système à double tube selon la revendication 7,
**caractérisé en ce**
**que** le gaz dans le deuxième espace annulaire (32) entre le tube intermédiaire (20) et le tube enveloppe (30) est de l'azote, en particulier de l'azote à une pression supérieure à 1200 hPa (1,2 bar) et inférieure à 2000 hPa (2,0 bar), en particulier de 1500 hPa (1,5 bar).

9. Système à double tube selon l'une quelconque des revendications précédentes,
**caractérisé en ce**
**qu'**un deuxième tube enveloppe (30) extérieur coaxial est prévu en dehors du tube enveloppe (30) au moins sur de petites sections dans la direction longitudinale du tube.

10. Système à double tube selon l'une quelconque des revendications précédentes,
**caractérisé en ce**
**que** des capteurs de pression sont prévus dans le deuxième espace annulaire (32), lesquels mesurent la pression du gaz s'y trouvant et transmettent des signaux à un dispositif d'affichage agencé à distance.

11. Système à double tube selon l'une quelconque des revendications précédentes,
**caractérisé en ce**
**que** le premier espace annulaire (22) et/ou le deuxième espace annulaire (32) sont remplis d'un matériau isolant, et
**que** des freins anti-convection, en particulier des couches de tissu de verre agencées coaxialement, sont prévus dans le matériau isolant.
